Europäisches Patentamt

(19) European Patent Office

Office européen des brevets

(11) **EP 1 097 367 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(51) Int Cl.7: **G01N 21/27**

(21) Anmeldenummer: **99938250.0**

(22) Anmeldetag: **15.07.1999**

(86) Internationale Anmeldenummer:
**PCT/EP99/05003**

(87) Internationale Veröffentlichungsnummer:
**WO 00/05567 (03.02.2000 Gazette 2000/05)**

(54) **VERFAHREN ZUM BEREITSTELLEN VON ABSORPTIONSKOEFFIZIENTEN**

METHOD FOR MAKING AVAILABLE ABSORPTION COEFFICIENTS

PROCEDE DE MISE A DISPOSITION DE COEFFICIENTS D'ABSORPTION

(84) Benannte Vertragsstaaten:
**DE FR GB IT**

(30) Priorität: **21.07.1998 DE 19832837**

(43) Veröffentlichungstag der Anmeldung:
**09.05.2001 Patentblatt 2001/19**

(73) Patentinhaber: **Deutsches Zentrum für Luft- und Raumfahrt e.V.**
**53175 Bonn (DE)**

(72) Erfinder:
- **BIRK, Manfred**
  **D-82110 Germering (DE)**
- **WAGNER, Georg**
  **D-82288 Kottgeisering (DE)**

(74) Vertreter: **von Kirschbaum, Albrecht, Dipl.-Ing.**
**Patentanwalt Postfach 1520**
**82102 Germering (DE)**

(56) Entgegenhaltungen:
WO-A-96/29590    DE-A- 3 247 807
US-A- 5 742 200

EP 1 097 367 B1

**Beschreibung**

Technisches Gebiet

Die Erfindung betrifft ein Verfahren gemäß dem Oberbegriff des Patentanspruchs 1.

Stand der Technik

Für die Ermittlung von Spurengasverteilungen aus spektroskopischen Messungen muß das Spektrum eines Spurengasgemisches in einem Gasgemisch, das im fraglichen Spektralbereich keine spektralen Signaturen zeigt, wie beispielsweise $CO_2$ in $N_2/O_2$, in Absorption oder Emission modelliert werden. Dieses Spektrum wird aus Absorptionskoeffizienten mittels der Strahlungstransferrechnung ermittelt.

Hierzu werden die Absorptionskoeffizienten eines jeden Spurengases in Abhängigkeit von der Temperatur und dem Gesamtdruck in einem Temperaturbereich und Gesamtdruckbereich, der für die Gasmischung relevant ist, sowie die Teilchenzahldichte eines jeden Spurengases, die Temperatur und den Druck entlang der Sichtlinie benötigt.

Die Ermittlung von Teilchenzahldichten aus Gasphasenspektren ist insbesondere für die Fernerkundung atmosphärischer Spurengase, die Bestimmung von Abgasen von Triebwerken oder Verbrennungsmotoren und allgemein für die quantitative Gasanalyse von Bedeutung. Diese Ermittlung erfordert zum Teil sehr zeitintensive Berechnungen von Absorptionskoeffizienten aus spektroskopischen Linienparametern wie Linienpositionen, Linienstärken und Druckverbreiterungsparametern.

Übliche Strahlungstransferprogramme wie FASCOD (S.A. Clough, F.Z. Kneizys, E.P. Shettle und G.P. Anderson, Proc. 6th Conf. Atmospheric Radiation, Williamsburg, 1986), Genln2 (D.P. Edwards, NCAR Technical Note 367 + STR, National Center for Atmospheric Research, 1992) verwenden hierzu Linienparameter aus spektroskopischen Datenbasen wie HITRAN (L.S. Rothman et al., Journ. Quant. Spectrosc. Radiat. Transfer, Vol. 48, Seiten 469-507, 1992). Im Falle sehr dichter Spektren wie z.B. denjenigen von Fluor-Chlor-Kohlenwasserstoffen werden Absorptionskoeffizienten der reinen Substanzen bei verschiedenen Temperaturen tabelliert.

Absorptionskoeffizienten sind im allgemeinen von der Wellenzahl, der Temperatur und den Partialdrücken aller Komponenten des Gasgemisches abhängig. Im Falle der atmosphärischen Spurengasanalytik ist nur der Luftdruck von Bedeutung. Der zumeist geringe Einfluß von Eigendruckverbreiterung läßt sich, falls nötig, durch einen effektiven Luftdruck berücksichtigen.

Es gibt bereits Ansätze, Absorptionskoeffizienten für ein Temperatur- und Druckgitter zu berechnen und die daraus resultierende riesige Datenbasis mit Hilfe der SVD-Zerlegung zu reduzieren (L.L. Strow, H.E. Motteler, R.G. Benson, S.E. Hannon, S. De Souza-Machado, Journ. Quant. Spectrosc. Radiat. Transfer, Vol. 59, Seiten 481-493, 1998).

Die bisherigen Verfahren haben jedoch den Nachteil, daß sie entweder zu ungenau sind oder lange Rechenzeiten benötigen und/oder sehr viel Speicherplatz beanspruchen. Dadurch erfordern sie umfangreiche und somit sehr kostenaufwendige Rechner und sind nur bedingt echtzeitfähig, was bedeutet, daß sie für einen operationellen Betrieb nicht anwendbar sind. Damit sind diese bisher bekannt gewordenen Verfahren für Wirtschaft und Umweltanalytik schlecht nutzbar.

Darstellung der Erfindung

Der Erfindung liegt die Aufgabe zugrunde, Absorptionskoeffizienten möglichst aus Messungen oder ausnahmsweise auch aus Berechnungen in einer Form bereitzustellen, mit der sich unter geringem Rechenaufwand und auch in Echtzeit die erforderlichen Absorptionskoeffizienten zur Gasanalyse gewinnen lassen.

Diese Aufgabe wird bei einem gattungsgemäßen Verfahren durch die im kennzeichnenden Teil des Patentanspruchs 1 angegebenen Merkmale gelöst.

Zweckmäßige Weiterbildungen des Verfahrens sind in den Unteransprüchen angegeben.

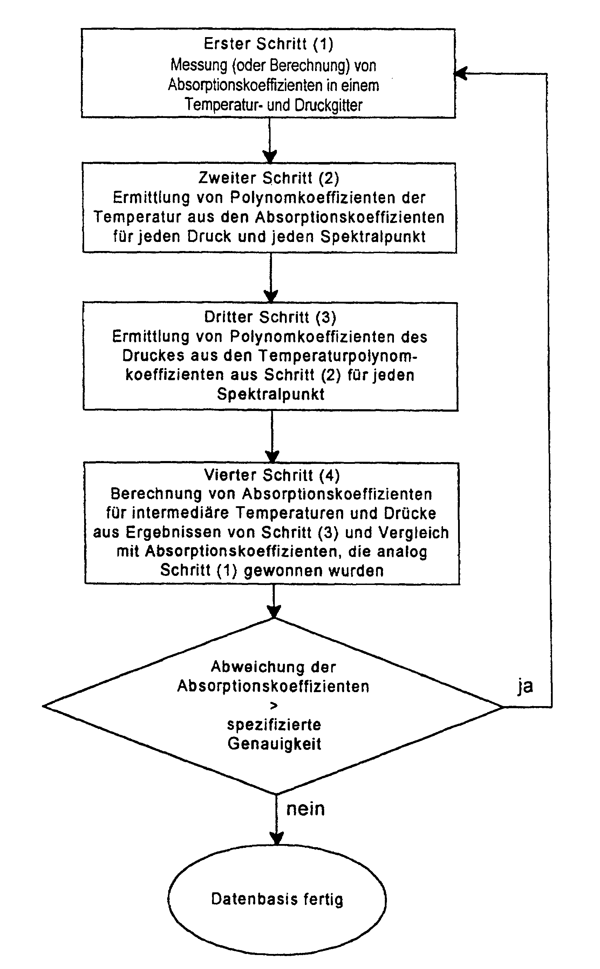

Kurze Beschreibung der Zeichnung

Anhand eines Ablaufdiagramms, das in der beigefügten Figur dargestellt ist, werden die Schritte des Verfahrens nach der Erfindung im einzelnen erläutert, wobei zu beachten ist, daß bei einem Spurengasgemisch dieses Verfahren für jedes einzelne interessierende Spurengas durchzuführen ist.

Ausführungsformen der Erfindung

Erster Schritt (1) :

Der erste Schritt (1) besteht im gewünschten Temperatur- und Gesamtdruckbereich in der Bestimmung von Absorptionskoeffizienten für eine bestimmte Gasspezies, die als Spurengas im Gemisch mit anderen Gasen vorliegt. Dieser Vorgang erfolgt bei mehreren diskreten Temperaturen und Gesamtdrücken eines verhältnismäßig groben Temperatur- und Druckgitters, wobei zu jeder Temperatur die Absorptionskoeffizienten für jeden Druck bestimmt werden müssen.

Das Absorptionskoeffizientenspektrum wird dabei in vorteilhafter Weise an äquidistant verteilten spektralen Stützstellen berechnet. Das Minimum sind je zwei Drücke und Temperaturen. Druck- und Temperaturstützstellen können beispielsweise äquidistant verteilt sein. Es ist vorteilhaft, die Stützstellen so zu wählen, daß die Änderungen der Absorptionskoeffizienten von Stützstelle zu Stützstelle ungefähr gleich sind.

Die Absorptionskoeffizienten können aus spektroskopischen Linienparametern mit Standardsoftware, z.B. FASCOD, berechnet oder aus Spektren ermittelt werden, die mit Hilfe eines Spektrometers gemessen wurden.

Zweiter Schritt (2) :

Der zweite Schritt (2) besteht in der Darstellung der Absorptionskoeffizienten mit Hilfe von Polynomen. Die Druck- und Temperaturabhängigkeiten der Absorptionskoeffizienten von einzelnen Moleküllinien sind stetige und differenzierbare Funktionen. Das gleiche gilt für beliebige Spektren, da sie durch Summierung der Beiträge der Einzellinien berechnet werden.

Daher lassen sich die Absorptionskoeffizienten für eine feste Wellenzahl als Polynom in der Temperatur und dem Druck entwickeln. Zunächst werden für jeden Druck $p_1$ und jede spektrale Stützstelle $\sigma_i$ die Absorptionskoeffizienten als Polynom der Temperatur $T_k$ entwickelt, d.h. es gibt für jedes $i$ und jedes $1$ $k$ Gleichungen:

$$\alpha\left(\sigma_i, T_k, p_t\right) = \sum_{n=0}^{N} A_n(i,l) T_k^n \quad , \qquad (1)$$

wobei $A_n(i,1)$ entsprechende Polynomkoeffizienten sind. $n$ ist die aktuelle Potenz von $T_k$ und nimmt folgende Werte an: 0,1,..., $N$. Stimmt die Zahl der Temperaturstützstellen mit derjenigen der Polynomkoeffizienten überein, so wird ein einfaches Gleichungssystem zur Bestimmung der Polynomkoeffizienten $A_n$ erhalten. Übersteigt die Zahl der Temperaturstützstellen diejenige der Polynomkoeffizienten, so lassen sich die Polynomkoeffizienten mittels der bekannten Methode der kleinsten Fehlerquadrate anpassen. Der maximale Polynomgrad wird zweckmäßig so gewählt, daß mit dem Polynom die Absorptionskoeffizienten innerhalb der gewünschten Genauigkeit wiedergegeben werden. Der gesamte Temperaturbereich kann dabei in einzelne Temperaturbereiche aufgeteilt werden, in denen jeweils Polynomkoeffizienten ermittelt werden.

Dritter Schritt (3):

Im nächsten, dem dritten Schritt (3) des Verfahrens werden die Temperaturpolynomkoeffizienten als Polynom des Druckes entwickelt. Für jede spektrale Stützstelle $\sigma_i$ und jeden Grad $n$ gibt es $1$ Gleichungen:

$$A_n(i, l) = \sum_{m=0}^{M} B_{nm}(i) p_1^m , \qquad (2)$$

wobei $B_{nm}(i)$ entsprechende Polynomkoeffizienten sind. $m$ ist die aktuelle Potenz von $p_1$ und nimmt folgende Werte an: 0,1,...,$M$. Stimmt die Zahl der Druckstützstellen mit derjenigen der Polynomkoeffizienten überein, so wird ein einfaches Gleichungssystem zu Bestimmung der Polynomkoeffizienten $B_{nm}$ erhalten. Übersteigt die Zahl der Druckstützstellen diejenige der Polynomkoeffizienten, so lassen sich die Polynomkoeffizienten mittels der bekannten Methode der kleinsten Fehlerquadrate anpassen.

Der maximale Polynomgrad wird zweckmäßig so gewählt, daß mit dem Polynom die Absorptionskoeffizienten innerhalb der gewünschten Genauigkeit wiedergegeben werden. Der gesamte Druckbereich kann dabei in einzelne Druckbereiche aufgeteilt werden, in denen jeweils Polynomkoeffizienten ermittelt werden.

Vierter Schritt (4):

Im nächsten, dem vierten Verfahrensschritt (4) werden mit den so ermittelten Polynomkoeffizienten Absorptionskoeffizienten für Testdrücke $p_t$ und Testtemperaturen $T_t$ berechnet, die innerhalb des gewünschten Temperatur- und Druckbereiches liegen und Zwischenwerte der ursprünglichen Temperatur- und Druckstützstellen darstellen:

$$\alpha(\sigma_i, T_t, p_t) = \sum_{n=0}^{N}\left[\sum_{m=0}^{M} B_{nm}(i)p_t^m\right]T_t^n . \qquad (3)$$

Diese Absorptionskoeffizienten werden mit Absorptionskoeffizienten verglichen, die analog dem ersten Verfahrensschritt für die entsprechenden Bedingungen erzeugt wurden. Übersteigen die Abweichungen die erforderliche Genauigkeit, so muß das Temperatur- und/oder Gesamtdruckgitter verfeinert werden. Zweckmäßig wird dazu die Zahl der Stützstellen im Temperatur- und Druckraum verdoppelt, d.h. die Intervalle werden halbiert. Anschließend werden die Verfahrensschritte 1 bis 4 so oft durchlaufen, bis die erforderliche Genauigkeit erreicht ist.
Ist dies der Fall, so bilden in vorteilhafter Weise die $B_{nm}$-Matrizen die neue platzsparende Form der Tabellierung der Absorptionskoeffizienten. Aus diesen Matrizen lassen sich mit geringem Rechenaufwand entsprechend Gleichung (3) die gewünschten Absorptionskoeffizienten berechnen.

**Patentansprüche**

1.  Verfahren zum Bereitstellen von insgesamt eine Datenbasis zur Gasanalyse aus Gasphasenspektren ergebenden Absorptionskoeffizienten eines einzelnen Gases oder von mehreren Gasen eines Gasgemisches über ein aus einer Vielzahl von Temperatur- und Gesamtdruckstützpunkten bestehendes Temperatur- und Druckgitter in einem gewünschten Temperatur- und Gesamtdruckbereich, **dadurch gekennzeichnet, daß** in einem ersten Schritt (1) die Absorptionskoeffizienten unter Zugrundelegung eines groben Temperatur- und Druckgitters für jedes der Gase aus Linienparametern direkt gemessen oder gegebenenfalls berechnet werden, daß in einem zweiten Schritt (2) für alle Temperaturstützpunkte oder eine Teilmenge davon Polynomkoeffizienten der Temperatur nach dem Verfahren der kleinsten Fehlerquadrate oder einem äquivalenten Verfahren für jeden Spektralpunkt und Druck an alle Absorptionskoeffizienten angepaßt werden, wobei die Polynomordnung derart gewählt wird, daß die Residuen der Anpassung kleiner als die erforderte Genauigkeit sind, daß in einem dritten Schritt (3) für alle Gesamtdruckstützpunkte oder eine Teilmenge davon die Polynomkoeffizienten des Druckes nach dem Verfahren der kleinsten Fehlerquadrate oder einem äquivalenten Verfahren für jeden Spektralpunkt an alle Temperaturpolynomkoeffizienten angepaßt werden, wobei die Polynomordnung derart gewählt wird, daß die Residuen der Anpassung kleiner als die erforderte Genauigkeit sind, daß in einem vierten Schritt (4) mit den so ermittelten Polynomkoeffizienten Absorptionskoeffizienten für Testgesamtdrücke und -temperaturen berechnet werden, die innerhalb des gewünschten Temperatur- und Gesamtdruckbereiches liegen und Zwischenwerte der Temperatur- und Gesamtdruckstützstellen darstellen, und daß diese berechneten Absorptionskoeffizienten mit bereits entsprechend dem ersten Schritt berechneten oder gemessenen Absorptionskoeffizienten für die entsprechenden Bedingungen verglichen werden, daß für den Fall, daß die bei diesem Vergleich festgestellten Abweichungen die erforderliche Genauigkeit übersteigen, die vier genannten aufeinanderfolgenden Verfahrensschritte (1 bis 4) mit einem verfeinerten Druck- und/oder Temperaturgitter so lange wiederholt werden, bis die erforderliche Genauigkeit erreicht ist, und daß die Datenbasis in Form der Polynomkoeffizienten gebildet wird und hieraus die Absorptionskoeffizienten berechnet werden.

2.  Verfahren nach Anspruch 1, **dadurch gekennzeichnet, daß** die verwendeten Druck- und Temperaturstützstellen äquidistant verteilt werden.

3.  Verfahren nach Anspruch 1, **dadurch gekennzeichnet, daß** die für die Ausführung vorzusehenden Stützstellen so gewählt werden, daß die Änderungen der Absorptionskoeffizienten von Stützstelle zu Stützstelle zumindest ungefähr gleich sind.

**4.** Verfahren nach einem der vorhergehenden Ansprüche, **dadurch gekennzeichnet, daß** beim ersten Verfahrensschritt die Absorptionskoeffizienten aus spektroskopischen Linienparametern mit Standardsoftware berechnet werden.

**5.** Verfahren nach einem der Ansprüche 1 bis 3, **dadurch gekennzeichnet, daß** beim ersten Verfahrensschritt die Absorptionskoeffizienten eines Spektrums ermittelt werden, das mit Hilfe eines Spektrometers gemessen wurde.

**6.** Verfahren nach einem der vorhergehenden Ansprüche, **dadurch gekennzeichnet, daß** für die Ausführung des zweiten Verfahrensschrittes der gesamte Temperaturbereich in einzelne Temperaturbereiche aufgeteilt wird, in denen jeweils Polynomkoeffizienten ermittelt werden.

**7.** Verfahren nach einem der vorhergehenden Ansprüche, **dadurch gekennzeichnet, daß** für die Ausführung des dritten Verfahrensschrittes der gesamte Druckbereich in einzelne Druckbereiche aufgeteilt wird, in denen jeweils Polynomkoeffizienten ermittelt werden.

**8.** Verfahren nach einem der vorhergehenden Ansprüche, **dadurch gekennzeichnet, daß** für die wegen Nichterreichens der erforderlichen Genauigkeit erfolgenden Wiederholungen des Ablaufs der vier Verfahrensschritte das verfeinerte Druck- und/oder Temperaturgitter dadurch gebildet wird, daß die Zahl der Stützstellen im Temperatur- und Druckraum bei jeder erneuten Wiederholung verdoppelt wird.

**Claims**

**1.** A method for providing absorption coefficients of a discrete gas or several gases of a gas mixture resulting in all in a data base for gas analysis from gas phase spectra over a temperature and pressure matrix consisting of a plurality of temperature and total pressure supporting points in a desired temperature and total pressure range comprising the steps:

- directly measuring or, where necessary, computing, in a first step (1), the absorption coefficients on the basis of a coarse temperature and pressure matrix for each of the gases from line parameters,
- adapting, in a second step (2), for all temperature supporting points, or a subset thereof, polynomial coefficients of the temperature by the least error squares method, or an equivalent method, for each spectral point and pressure to all absorption coefficients, the polynomial order being selected such that the residues of the adapting procedure are smaller than the required accuracy,
- adapting, in a third step (3) for all total pressure supporting points, or a subset thereof, polynomial coefficients of the pressure by the least error squares method, or an equivalent method, for each spectral point and pressure to all temperature polynomial coefficients, the polynomial order being selected such that the residues of the adapting procedure are smaller than a the require accuracy,
- computing, in a fourth step (4), with the thus obtained polynomial coefficients the absorption coefficients for test total pressures and temperatures within the desired temperature and total pressure range and representing intermediate values of the temperature and total pressure supporting points, and
- comparing the computed absorption coefficients to the absorption coefficients for the corresponding conditions as already computed or measured in the first step and, should the departures from this comparison exceed the require accuracy,
- repeating the steps (1 to 4) of the method in sequence with a refined pressure and/or temperature matrix until the required accuracy is attained, said data base being formed in the form of the polynomial coefficients from which said absorption coefficients are computed.

**2.** The method as set forth in claim 1 wherein said pressure and temperature supporting points as used are distributed equidistant.

**3.** The method as set forth in claim 1 wherein said supporting points provided for implementation are selected so that the changes in the absorption coefficients from one supporting point to the other are at least roughly the same.

**4.** The method as set forth in any of the preceding claims wherein in the first step thereof said absorption coefficients are computed from spectrosccopic line parameters using standard software.

**5.** The method as set forth in any of the claims 1 to 3 wherein in the first step thereof said absorption coefficients of a spectrum are established as measured with the aid of a spectrometer.

**6.** The method as set forth in any of the preceding claims wherein for implementing said second step of the method said total temperature range is divided into discrete temperature ranges, in each of which polynomial coefficients are established.

**7.** The method as set forth in any of the preceding claims wherein for implementing said third step of the method said total pressure range is divided into discrete pressure ranges, in each of which polynomial coeefficients are established.

**8.** The method as set forth in any of the preceding claims wherein for repeating the sequence of said four steps in the method, due to the required accuracy not being attained, said refined pressure and/or temperature matrix is formed by the number of the supporting points in the temperature or pressure space being doubled for each new repetition.

## Revendications

**1.** Procédé pour obtenir des coefficients d'absorption fournissant globalement une base de données pour l'analyse de gaz à partir de spectres de phase gazeuse, d'un gaz individuel ou de plusieurs gaz d'un mélange gazeux par l'intermédiaire d'une grille de températures et de pressions, constituée par une multiplicité de points d'appui pour la température et pour la pression totale, dans une gamme désirée de températures et de pressions totales, **caractérisé en ce que** lors d'une première étape (1), les coefficients d'absorption sont mesurés directement ou éventuellement calculés en prenant pour base une grille approximative de températures et de pressions pour chacun des gaz, à partir de paramètres de raies, que lors d'une seconde étape (2), on adapte pour tous les points d'appui de température ou pour une partie de ces points, des coefficients de température de polynôme conformément au procédé de la somme minimale des erreurs quadratiques ou conformément à un procédé équivalent pour chaque point spectral et chaque pression, à tous les coefficients d'absorption, l'ordre du polynôme étant choisi de telle sorte que les résidus de l'adaptation soient inférieurs à la pression requise, que lors d'une troisième étape (3), pour tous les points d'appui de pression totale ou une partie de ces points, on adapte les coefficients de pression de polynôme conformément au procédé de l'erreur quadratique minimale ou selon un procédé équivalent pour chaque point spectral, à tous les coefficients de température de polynôme, l'ordre du polynôme étant choisi de telle sorte que les résidus de l'adaptation sont inférieurs à la pression requise, que lors d'une quatrième étape (4) on calcule, avec des coefficients de polynôme ainsi déterminés, les coefficients d'absorption pour les pressions totales et les températures de test, qui se situent à l'intérieur de la gamme désirée de températures et de pressions totales, et représentent des valeurs intermédiaires des points d'appui pour la température et la pression totale, et que l'on compare ces coefficients d'absorption calculés à des coefficients d'absorption, calculés ou mesurés conformément à la première étape, pour les conditions correspondantes, et que dans le cas où les écarts déterminés lors de cette comparaison dépassent la précision requise, les quatre étapes opératoires successives indiquées (1 à 4) sont répétées dans une grille affinée de pressions et/ou de températures jusqu'à ce que la pression requise soit atteinte, et que la base de données est formée sous la forme de coefficients de polynôme et que les coefficients d'absorption sont calculés à partir de là.

**2.** Procédé selon la revendication 1, **caractérisé en ce que** les points utilisés d'appui de la pression et de la température sont répartis d'une manière équidistante.

**3.** Procédé selon la revendication 1, **caractérisé en ce que** les points d'appui devant être préférés pour la réalisation sont choisis de telle sorte que les variations des coefficients d'absorption d'un point d'appui à un autre sont au moins approximativement identiques.

**4.** Procédé selon l'une des revendications précédentes, **caractérisé en ce que** lors de la première étape opératoire, les coefficients d'absorption sont calculés à partir de paramètres de raies spectroscopiques avec un logiciel standard.

**5.** Procédé selon l'une des revendications 1 à 3, **caractérisé en ce que** lors de la première étape du procédé, on détermine les coefficients d'absorption d'un spectre qui a été mesuré à l'aide d'un spectromètre.

6. Procédé selon l'une des revendications précédentes, **caractérisé en ce que** pour l'exécution de la seconde étape opératoire, on divise l'ensemble de la gamme de températures en des gammes individuelles de températures, dans lesquelles sont déterminés les coefficients respectifs du polynôme.

7. Procédé selon l'une des revendications précédentes, **caractérisé en ce que** pour l'exécution de la troisième étape opératoire, la troisième gamme de pressions est divisée en gammes individuelles de pression, dans lesquelles des coefficients du polynôme sont respectivement déterminés.

8. Procédé selon l'une des revendications précédentes, **caractérisé en ce que** pour les répétitions du déroulement des quatre étapes opératoires, qui s'effectuent en raison de la non obtention de la précision requise, la grille affinée de pressions et/ou de températures est formée par le fait que le nombre des points d'appui dans le domaine des températures et dans le domaine des pressions est doublé pour chaque nouvelle répétition.

Erster Schritt (1)
Messung (oder Berechnung) von
Absorptionskoeffizienten in einem
Temperatur- und Druckgitter

Zweiter Schritt (2)
Ermittlung von Polynomkoeffizienten der
Temperatur aus den Absorptionskoeffizienten
für jeden Druck und jeden Spektralpunkt

Dritter Schritt (3)
Ermittlung von Polynomkoeffizienten des
Druckes aus den Temperaturpolynomkoeffizienten aus Schritt (2) für jeden
Spektralpunkt

Vierter Schritt (4)
Berechnung von Absorptionskoeffizienten
für intermediäre Temperaturen und Drücke
aus Ergebnissen von Schritt (3) und Vergleich
mit Absorptionskoeffizienten, die analog
Schritt (1) gewonnen wurden

Abweichung der
Absorptionskoeffizienten
>
spezifizierte
Genauigkeit

ja

nein

Datenbasis fertig